Europäisches Patentamt

European Patent Office

Office européen des brevets

(19)

(11) Veröffentlichungsnummer: **0 120 401**

**A1**

(12) **EUROPÄISCHE PATENTANMELDUNG**

(21) Anmeldenummer: **84102736.0**

(22) Anmeldetag: **13.03.84**

(51) Int. Cl.³: **G 05 B 19/407**

(30) Priorität: **16.03.83 DE 3309433**

(43) Veröffentlichungstag der Anmeldung:
**03.10.84 Patentblatt 84/40**

(84) Benannte Vertragsstaaten:
**CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Kerscher, Heinrich, Dipl.-Ing**
**Angerhofstrasse 14**
**D-8034 Germering(DE)**

(54) **Verfahren und Anordnung zur Positionierung mit Schrittmotoren.**

(57) Zur Positionierung eines Typenrades wird ein Schrittmotor verwendet. Der Schrittmotor wird beschleunigt und gemäß einer Bremskennlinie abgebremst. Während eines Teiles der Beschleunigungsphase wird die Bremskennlinie in einem Bremskurvenspeicher mit RAM-Struktur aufgebaut.

FIG 3

EP 0 120 401 A1

0120401

SIEMENS AKTIENGESELLSCHAFT
Berlin und München

Unser Zeichen
VPA 83 P 1151 E

Verfahren und Anordnung zur Positionierung mit Schrittmotoren

Die Erfindung betrifft ein Verfahren gemäß dem Oberbegriff des Patentanspruchs 1.

In der Fernschreib- und Schreibmaschinentechnik ist es allgemein bekannt, einen Druckerwagen mit einem Schrittmotor entlang eines Aufzeichnungsträgers zu positionieren (DE-OS 22 32 590). Weiter ist es bekannt, einen Typenträger, sei es ein Typenzylinder oder ein Typenrad, über einen Schrittmotor voreinzustellen, und dann beispielsweise über einen Druckhammer die voreingestellte Type zum Abdruck zu bringen.

Aus der DE-OS 30 08 289 ist eine Anordnung zur Positionierung eines Typenrades bekannt. Hierbei ist ein digitaler Regelkreis vorgesehen. Dieser bewirkt in Abhängigkeit von einem, durch eine Zieladresse vorgegebenen Zielpunkt, über die ein Drehfeld erzeugende elektronische Einrichtung, eine Beschleunigung des Schrittmotors bis zu einer, von der momentanen Entfernung bis zur Zielposition abhängigen, in einem Speicher gespeicherten Drehzahl. Der Beschleunigungsphase und einer bedarfsweise vorgesehenen Phase konstanter Drehgeschwindigkeit, schließt sich eine Bremsphase an, in der durch Abruf einer, in einem Bremskurvenspeicher gespeicherten Bremskurve, bis in den Umgebungsbereich des Zielpunktes der Schrittmotor abgebremst wird. Weiter ist ein zusätzlicher analoger Servoregelkreis vorgesehen, der in Abhängigkeit von der Signalamplitude des Positionsgebersignals die Feinregelung bis zum Zielpunkt vornimmt. Diese Anordnung hat den Nachteil,

Kro 1 Fra / 7.3.1983

daß die im Bremskurvenspeicher gespeicherte Bremskurve nur für ein Typenrad, d.h. für das Trägheitsmoment eines Typenrades optimal bemessen ist. Sollen Typenräder mit unterschiedlichen Trägheitsmomenten verwendet werden, so muß die Bremskurve für den ungünstigsten Fall, d.h. das Typenrad mit dem größten Trägheitsmoment und den Motor mit dem kleinsten Drehmoment ausgelegt sein. Eine nachträgliche Änderung ist auf einfache Weise nicht möglich.

Es ist Aufgabe der Erfindung, für Druckereinrichtungen ein Ansteuerverfahren und eine Anordnung zum Betrieb eines Schrittmotors anzugeben, bei welchen unterschiedliche Belastungen des Rotors des Schrittmotors selbsttätig ausgeglichen werden.

Diese Aufgabe wird erfindungsgemäß bei einem Verfahren und einer Anordnung der eingangs genannten Art durch die in den kennzeichnenden Teilen der Patentansprüche 1 und 7 angegebenen Merkmale gelöst.

Vorteilhafte Ausgestaltungen sind in den Unteransprüchen angegeben.

Dadurch, daß ein Bremskurvenspeicher mit einer RAM-Struktur verwendet wird, ist es möglich, im Betrieb den Rotor des Schrittmotors mit unterschiedlichen Trägheitsmomenten zu belasten, ohne für jedes Trägheitsmoment die Ansteuerelektronik auswechseln zu müssen.

Dadurch, daß die Bremskennlinienwerte in aufeinanderfolgende Speicherplätze eingeschrieben werden, ergibt sich eine einfache Adressierung der Speicherplätze.

Dadurch, daß die Beschleunigungswerte über konstante Winkelstrecken ermittelt werden, kann ein einfacher Positionskleber mit einer Lichtschranke und einer, mit Schlitzen versehenen Abtastscheibe verwendet werden.

Vorteilhaft ist die Verwendung des erfindungsgemäßen Verfahrens zur Positionierung eines Typenrades mit einem Schrittmotor in einem Druckwerk.

Weiter ist es vorteilhaft, wenn durch das erfindungsgemäße Verfahren ein Druckerwagen mit einem Schrittmotor entlang eines Aufzeichnungsträgers positioniert wird.

Besonders vorteilhaft ist es, daß auch später entwickelte Typenräder, für die keine spezielle Bremskennlinie vorprogrammiert ist, optimal positioniert werden können.

Vorteilhaft ist auch die Unabhängigkeit des erfindungsgemäßen Verfahrens bzw. Anordnung von verschiedenen Reibungsbelastungen, die durch den unterschiedlichen Luftwiderstand der Typenräder bei schnellen Drehbewegungen verursacht wird.

Im folgenden wird die erfindungsgemäße Anordnung anhand eines in der Zeichnung dargestellten Ausführungsbeispieles erläutert. Dabei zeigen

Fig. 1 ein Blockschaltbild der bekannten Anordnung zur Positionierung eines Typenrades in einer Fernschreibmaschine,

Fig. 2 eine schematische Darstellung der Ausgangssignale eines Positionsgebers,

Fig. 3 ein Prinzipschaltbild der erfindungsgemäßen Anordnung zur Positionierung eines Typenrades in einer Fernschreibmaschine und

Fig. 4 eine schematische Darstellung des eigentlichen Positioniervorganges.

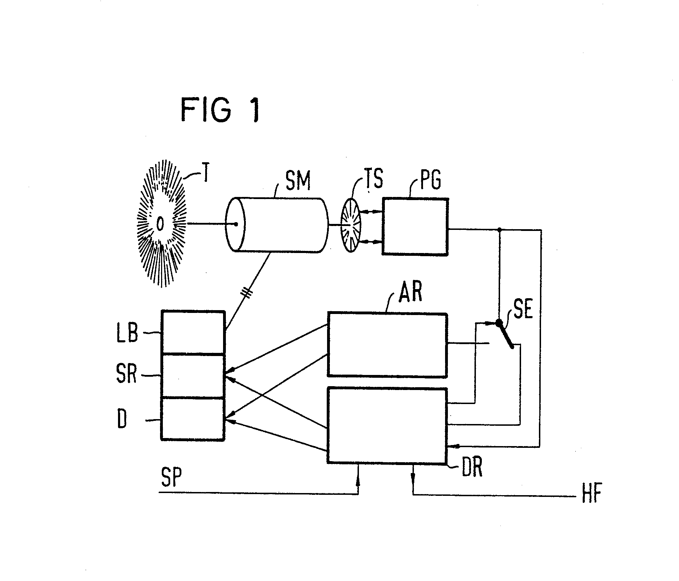

Die in der Fig. 1 dargestellte, aus der DE-OS 30 08 289 bekannte Anordnung zur Positionierung eines Typenrades T in einer Fernschreibmaschine, besteht aus einem dreiphasigen Schrittmotor SM, dessen Läufer fest mit einem Typenrad T und einem inkrementalen optischen Positionsgeber PG gekoppelt ist. Dieser inkrementale optische Positionsgeber PG enthält eine Taktscheibe TS, die entsprechend der Anzahl der verwendeten Speichen des Typenrades T Fenster aufweist, die über eine hier nicht dargestellte optische Anordnung abgetastet werden.

Die Positionieranordnung bildet zusammen mit dem Schrittmotor SM einen geschlossenen Regelkreis, wobei zur exakten Positionierung ein bedarfsweise über eine Schalteinrichtung SE zuschaltbarer digitaler Regelkreis DR und zur Feinregelung in die Sollposition ein analoger Regelkreis AR vorgesehen sind. Die Regelkreise DR, AR stehen jeweils mit einem, den Schrittmotor SM ansteuernden Drehfeldschalter D, einem Zweipunktstromregler SR und einer dreiphasigen Leistungsbrücke LB in Verbindung. Über eine hier nicht dargestellte, bekannte Eingabevorrichtung wird der Positionieranordnung das Signal für die Sollposition SP des Typenrades T zugeführt. Nach erfolgter Einstellung des Typenrades T erfolgt über ein Druckhammerfreigabesignal HF die Freigabe und Auslösung das den Abdruck hervorrufenden, hier ebenfalls nicht dargestellten Druckhammers.

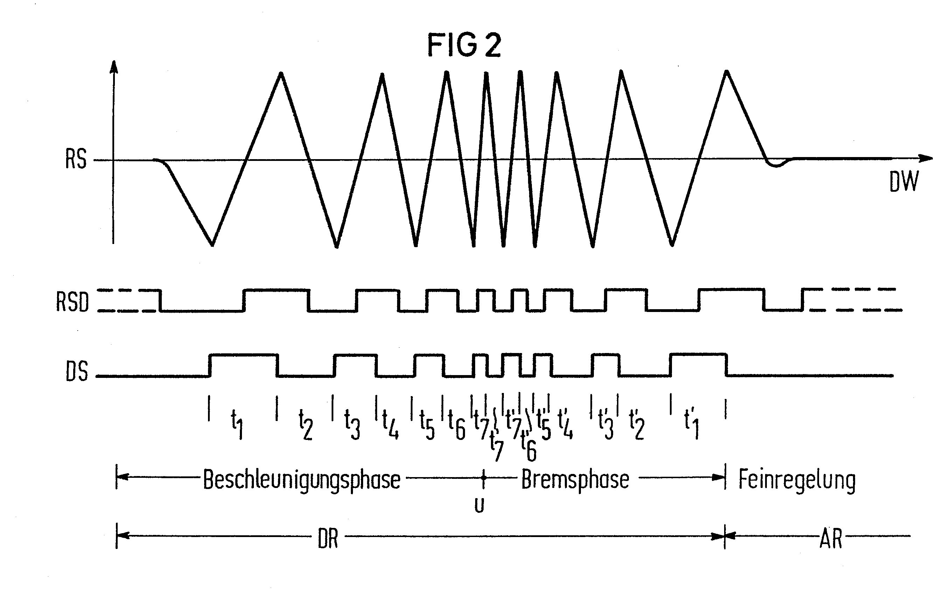

Entsprechend der Darstellung in Fig. 2 liefert der Positionsgeber PG ein dreieckförmiges Regelsignal RS, das in Abhängigkeit vom Drehwinkel DW des Schrittmotors SM dargestellt ist. Das Regelsignal RS entsteht durch die Abtastung der Schlitze der Taktscheibe TS, beispielsweise mit einer ersten Lichtschranke. Neben diesem Regelsignal RS wird außerdem ein digitalisiertes Regelsignal RSD, und ein, gegenüber dem digitalisierten Regelsignal RSD um 90° versetztes Drehrichtungssignal DS abgegeben. Das digitalisierte Regelsignal RSD erhält man in bekannter Weise aus dem Regelsignal RS unter Verwendung einer Schwellwertschaltung. Das Drehrichtungssignal DS entsteht auf die gleiche Art durch Verwendung einer zweiten, gegenüber der ersten elektrisch um 90° versetzte Lichtschranke. Aus den letzten beiden Signalen ist die Drehrichtung des Typenrades T in bekannter Weise ableitbar.

Das Drehrichtungssignal DS (und ebenso das digitalisierte Regelsignal RSD) besteht aus einer abwechselnden Folge von ersten und zweiten Binärwerten. Die Zeitdauer zwischen dem ersten und dem zweiten Wechsel bestimmt den Zeitabstand t1, die zwischen dem zweiten und dem dritten, den Zeitabstand t2, usw. bis beispielsweise zum Zeitabstand t7. Analog sind die Zeitabstände t7' bis t1' in der Bremsphase bestimmt.

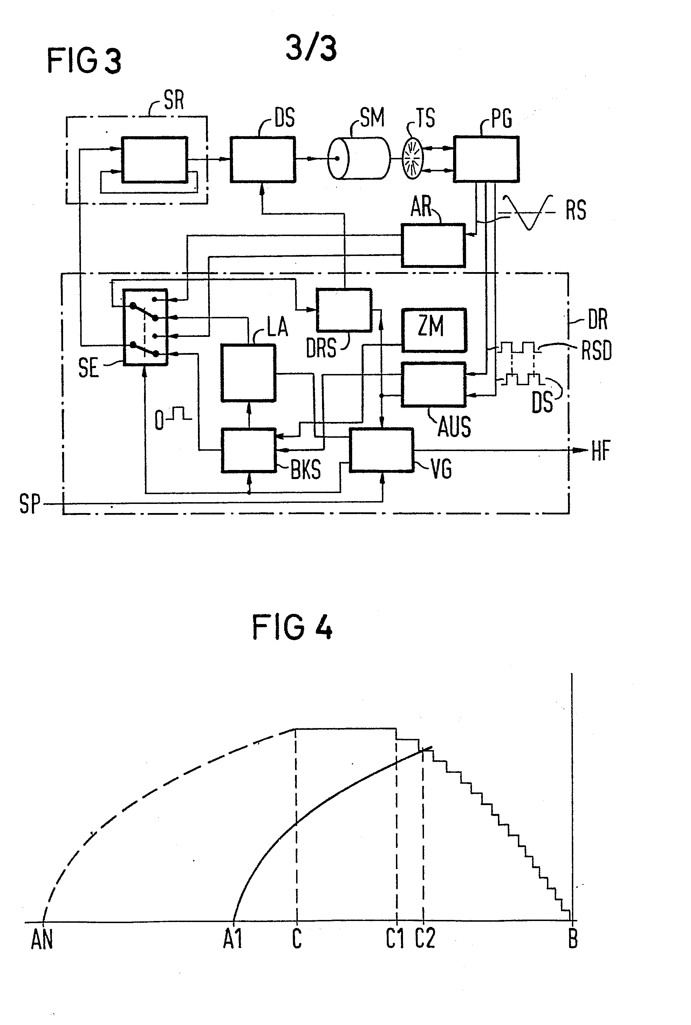

Die Fig. 3 zeigt ein Blockschaltbild der erfindungsgemäßen Positionieranordnung. Diese unterscheidet sich von der bekannten, durch die zusätzliche Zeitmeßanordnung ZM im digitalen Regelkreis DR, die später erläutert wird. Ein weiterer Unterschied besteht darin, daß in der erfindungsgemäßen Anordnung der Bremskurvenspeicher BKS eine RAM-Struktur (Schreib-Lesespeicher) besitzt, während der bekannte, eine ROM-Struktur (Nur-Lesespeicher) besitzt. Als Bremskurvenspeicher BKS kann jeder Speicher verwendet werden, in den Daten eingeschrieben und aus dem Daten ausgelesen werden können. Der digitale Regelkreis DR ist strichpunktiert umrahmt. Er funktioniert in folgender Weise: Der digitale Regelkreis DR erhält seine digitalen Regelsignale RSD und DS zur Bestimmung der Position von dem Positionsgeber PG. Ausgehend von der Synchronstellung wird die Positionieradresse SP über eine Vergleichseinrichtung VG mit der jeweiligen Ist-Position, die über eine Auswerteschaltung AUS ermittelt wird, verglichen. Damit wählt der digitale Regelkreis DR über eine logische Anordnung LA die Drehrichtung, welche die kürzeste Verbindung zur neuen Position liefert und steuert diese mit maximalem Moment (Konstantstrom) an. Die Vollbremsung geschieht durch Stromumkehr, und findet daher mit maximalem Moment (Konstantstrom) statt.

In der Beschleunigungsphase wird das Typenrad T (Fig. 1) vom digitalen Regelkreis DR mit der maximal möglichen Geschwindigkeit zum Umschaltpunkt geführt. In der folgenden Bremsphase wird das Typenrad T abgebremst und mit angepaßter Drehgeschwindigkeit an den analogen Regelkreis AR zur Feinregelung übergeben. Der analoge Regelkreis AR führt das Typenrad T zur Sollposition SP, an der der Abdruck der ausgewählten Typen ausgelöst wird. Durch den analogen Regelkreis AR ist die oben erwähnte, angepaßte Drehgeschwindigkeit vorgegeben.

Zwischen der Beschleunigungsphase und der Bremsphase kann sich auch ein Bereich konstanter Geschwindigkeit (Freilauf) befinden.

Die Positionierung zur nächsten Position des Typenrades T erfolgt über die kürzeste Entfernung anhand einer in der Fig. 4 dargestellten Geschwindigkeitskurve. Das Drehfeld ist dabei so ausgelegt, daß der Schrittmotor SM seine maximale Drehgeschwindigkeit von ca. 1400 Umdrehungen je Minute schon nach ca. 20 überlaufenen Zeichenteilungen (70° Drehung) erreicht.

Entsprechend der Darstellung in Fig. 4, bei der die Umdrehungsgeschwindigkeit des Schrittmotors SM (Ordinate) in Abhängigkeit von der Entfernung (Abszisse) zwischen zwei Positionierpunkten AN und B dargestellt ist, erfolgt die Positionierung von der Anfangsposition AN bis zur Endposition B wie folgt:

0120401

Der Schrittmotor SM wird bis zur Position C zunächst voll beschleunigt. In einem Bremskurvenspeicher BKS werden hierbei die ersten Geschwindigkeitswerte beim Hochlaufen des Schrittmotors, d.h. die ersten Zeitabstände t1 bis t7 (Fig. 2) bzw. die entsprechenden Daten gespeichert. Das Einschreiben der Daten (Speicherung) bzw. das später erwähnte Auslesen der Daten in bzw. aus dem Bremskurvenspeicher BKS geschieht in bekannter Weise. Der Bremskurvenspeicher BKS ist beispielsweise Teil eines Prozessorsystems und wird von der CPU adressiert. Durch sie werden vorzugsweise aufeinanderfolgende Speicherplätze im Bremskurvenspeicher BKS adressiert. Die Zeitabstände t1 bis t7 werden von der Zeitmeßanordnung ZM, die beispielsweise einen Zähler und einen Taktgeber enthält, ermittelt. Zähler und Taktgeber können auch Bestandteil des Prozessorsystems sein. Durch Abzählen der Taktimpulse des Taktgebers während der Zeitabstände t1 bis t7, werden die entsprechenden Daten ermittelt, und im Bremskurvenspeicher BKS abgelegt. Dieser Beschleunigungsphase schließt sich bedarfsweise eine Phase konstanter Geschwindigkeit (Freilauf) vom Punkt C zum Punkt C1 an. Ab dem Punkt C1 bis zur Endposition B wird der Schrittmotor SM entsprechend der gespeicherten Bremskurve abgebremst. Die Bremskurve enthält die Beziehung zwischen der Drehgeschwindigkeit des Typenrades T und der Entfernung bis zur Endposition B für einen optimalen Bremsvorgang, da sie immer der Kombination aus dem Trägheitsmoment des Typenrades T und dem Drehmoment des Schrittmotores SM angepaßt ist. Voraussetzung dafür ist, daß sich die Systembedingungen, wie maximaler Strom beim Beschleunigen oder Bremsen, Reibungskräfte u.ä. während eines Beschleunigungs- und Bremszyklus nicht ändern bzw. konstant bleiben. Der Schrittmotor SM kommt in der Endposition B mit geringer Geschwindigkeit, d.h. ohne wesentliches Überschwingen zum Stehen. Dies ist eine wichtige Voraussetzung für die Übergabe des Positioniervorganges von der Grobeinstellung des digitalen Regelkreises DR zur Feineinstellung des analogen Regelkreises AR.

Das Drehmoment beim Bremsvorgang des Schrittmotors SM ist keinesfalls kleiner als das Drehmoment beim Beschleunigungsvorgang, da die elektromotorische Kraft immer entgegen der Drehrichtung des Schrittmotors SM wirkt. Über die in Form von Zeitabständen gespeicherte Bremskurve wird die Drehgeschwindigkeit des Schrittmotors SM soweit vermindert, daß die vollständige Abbremsung in der Umgebung der Endposition von dem analogen Regelkreis AR durchgeführt werden kann. Die eigentliche Abbremsung erfolgt dadurch, daß zu Beginn jeder Periode des Drehrichtungssignals DS, d.h. nach jedem Wechsel des Binärwertes desselben (Fig. 2) die gemessene Ist-Geschwindigkeit, d.h. die von der Zeitmeßanordnung ZM ermittelten Zeitabstände t1' bis t7' mit den im Bremskurvenspeicher BKS vorgegebenen Zeitabständen t1 bis t7 verglichen werden. In Abhängigkeit von der Differenz aus dem Soll- und dem Ist-Wert wird während dieser Signalperiode der Schrittmotor SM auf Bremsen oder Freilauf geschaltet. Wenn die Differenz Null ist, d.h. der Ist-Zeitabstand gleich dem vorgegebenen Zeitabstand, so wird auch während der nächsten Periode des Regelsignals DS voll gebremst. Wenn die Differenz ungleich Null ist, so wird nach dem im Bremskurvenspeicher BKS gespeicherten Zeitabstand auf Freilauf geschaltet. Entspricht die Differenz einem Viertel des vorgegebenen Zeitabstandes, so wird zudem für die Dauer der Differenz in der nächsten Signalperiode auf Freilauf geschaltet, und anschließend mit vermindertem Strom für die verkürzte Zeitdauer gebremst. Entspricht die Differenz der Hälfte des vorgegebenen Zeitabstandes, so wird für die anschließende Signalperiode auf Freilauf geschaltet. Wenn die Differenz größer ist als die Hälfte des vorgegebenen Zeitabstandes, so wird in der nächsten Signalperiode für die Dauer der Differenz beschleunigt und anschließend auf Freilauf geschaltet. Damit wird erreicht, daß der Schrittmotor SM mit angepaßter Geschwindigkeit in die Endposition B einläuft. Im Bereich der Endposition B wird die Positionierung von dem analogen Regelkreis AR übernommen, der den Schrittmotor SM in die exakte Position bringt.

Selbstverständlich ist es auch möglich, daß die Ausgangspunkte AN und die Zielpunkte B dichter beieinander liegen, so daß dazwischen kein Freilauf notwendig ist. Ein derartiger Beschleunigungs- und Bremskurvenverlauf ist in Fig. 4 durch die Punkte A1, C2 und B dargestellt.

Das erfindungsgemäße Verfahren ist aber nicht auf die Positionierung von Typenrädern beschränkt. Soll z.B. ein Druckerwagen mit unterschiedlichen Druckwerken (Typenrad-, Nadel-, Tintenspritzdruckwerk) entlang eines Aufzeichnungsträgers positioniert werden, so mußte bisher die gesamte Ansteuerelektronik ausgewechselt werden. Mit dem erfindungsgemäßen Verfahren ist eine automatische Anpassung der Bremsvorgänge an die unterschiedlichen Gewichte, d.h. Drehmomente des Schrittmotors gegeben.

10 Patentansprüche
4 Figuren

Bezugszeichenliste

| | |
|---|---|
| T | Typenrad |
| LB | Leistungsbrücke |
| SR | Stromregler |
| D | Drehfeldschalter |
| SM | Schrittmotor |
| TS | Taktscheibe |
| PG | Positionsgeber |
| SP | Sollposition |
| RS | Regelsignal |
| AR | analoger Regelkreis |
| DR | digitaler Regelkreis |
| RSD | digitalisiertes Regelsignal |
| DS | Drehrichtungssignal |
| AUS | Auswerteschaltungsanordnung |
| VG | Vergleicher |
| ZM | Zeitmessanordnung |
| BKS | Bremskurvenspeicher |
| SE | Schalteinrichtung |
| LA | logische Anordnung |
| HF | Druckhammerfreigabesignal |
| DW | Drehwinkel |
| AN | Anfangsposition |
| B | Zielposition |
| A1, C, C1 | Positionen |
| t1..t7, t1'..t7' | Zeitabstände |

Patentansprüche

1. Verfahren zum Betrieb eines Schrittmotors (SM) unter Verwendung eines, dem Rotor zugeordneten Positionsgebers (PG) und einer, ein Drehfeld erzeugenden elektrischen Einrichtung (D, LB), die einen Regelkreis (DR) aufweist, der derart ausgebildet ist, daß abhängig vom Zielpunkt der Schrittmotor (SM) beschleunigt, dann bedarfsweise in Freilauf betrieben und in der Bremsphase gemäß einer Bremskennlinie abgebremst wird, wobei die Bremskennlinienwerte aus einem Bremskurvenspeicher (BKS) abgerufen werden,

d a d u r c h   g e k e n n z e i c h n e t ,   daß ein Bremskurvenspeicher (BKS) mit einer RAM-Struktur vorgesehen ist, und

daß zumindest während einer Teilphase der Beschleunigungsphase die Bremskennlinienwerte über die Beschleunigungswerte ermittelt werden, und in den Bremskurvenspeicher (BKS) eingeschrieben werden.

2. Verfahren nach Anspruch 1,
d a d u r c h   g e k e n n z e i c h n e t ,   daß die Bremskennlinienwerte in aufeinanderfolgende Speicherplätze des Bremskurvenspeichers (BKS) eingeschrieben werden, und während der Bremsphase in umgekehrter Reihenfolge ausgelesen werden.

3. Verfahren nach Anspruch 1 oder 2,
d a d u r c h   g e k e n n z e i c h n e t ,   daß die Beschleunigungswerte über konstante Winkelstrecken ermittelt werden.

4. Verfahren nach Anspruch 1 oder 2,
d a d u r c h   g e k e n n z e i c h n e t ,   daß die Beschleunigungswerte über konstante Zeitabstände ermittelt werden.

5. Verfahren nach einem der Ansprüche 1 bis 4,
d a d u r c h   g e k e n n z e i c h n e t ,   daß
durch den Schrittmotor (SM) ein Typenrad (T) in einem
Druckwerk positioniert wird.

6. Verfahren nach einem der Ansprüche 1 bis 4,
d a d u r c h   g e k e n n z e i c h n e t ,   daß
durch den Schrittmotor (SM) ein Druckerwagen entlang
eines Aufzeichnungsträgers positioniert wird.

7. Anordnung zum Betrieb eines Schrittmotors (SM) mit
einem, dem Rotor zugeordneten Positionsgeber (PG) und mit
einer, ein Drehfeld erzeugenden elektrischen Einrichtung
(D, LB), und mit einer Regelkreisanordnung (DR), die derart ausgebildet ist, daß abhängig vom Zielpunkt der
Schrittmotor (SM) beschleunigt, dann bedarfsweise in
Freilauf betrieben und in der Bremsphase gemäß einer
Bremskennlinie abgebremst wird, wobei die Bremskennlinienwerte aus einem zugeordneten Bremskurvenspeicher
(BKS) abgerufen werden,
g e k e n n z e i c h n e t   d u r c h   einen Bremskurvenspeicher (BKS) mit einer RAM-Struktur, durch eine
Zeitmeßanordnung (ZM) zur Ermittlung der Beschleunigungswerte aus den vom Positionsgeber (PG) abgegebenen Signalen, und durch eine Adressiereinrichtung, über die die
Beschleunigungswerte als Bremskennlinienwerte in den
Bremskurvenspeicher (BKS) einschreibbar sind.

8. Anordnung nach Anspruch 7,
d a d u r c h   g e k e n n z e i c h n e t ,   daß auf
dem Rotor des Schrittmotors (SM) ein Typenrad (T) angeordnet ist.

9. Anordnung nach Anspruch 7 oder 8,
d a d u r c h   g e k e n n z e i c h n e t ,   daß der
Positionsgeber (PG) aus einer auf dem Rotor des Schrittmotors (SM) angeordneten Taktscheibe (TS) mit Schlitzen und einem optischen Abtaster besteht, der die Schlitze der Taktscheibe (TS) abtastet.

10. Anordnung nach einem der Ansprüche 7 bis 9, d a d u r c h   g e k e n n z e i c h n e t , daß die Zeitmeßanordnung (ZM) einen Zähler und einen Taktgeber enthält, wobei der Zähler die Anzahl der Taktimpulse zwischen den Wechseln des Signals (DS) als Bremskennlinienwerte ermittelt.

FIG 1

FIG 2

RS

DW

RSD

DS

$t_1$  $t_2$  $t_3$  $t_4$  $t_5$  $t_6$  $t_7$  $t'_7$  $t'_5$  $t'_4$  $t'_3$  $t'_2$  $t'_1$

$t_7$  $t'_6$

Beschleunigungsphase — Bremsphase — Feinregelung

U

DR — AR

2/3

0120401

# FIG 3

# FIG 4

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 512 604 (SHINSHU SEIKI K.K.) <br> * Seite 17, Zeile 28 - Seite 19, Zeile 27; Seite 6, Zeile 13 - Seite 7, Zeile 33; Seite 9, Zeile 10 - Seite 11, Zeile 37; Abbildungen 2,3,6 * <br><br> --- | 1,2,5-10 | G 05 B 19/407 |
| A | DE-A-2 909 842 (SCI SYSTEMS) <br> * Seite 10, Zeilen 8-23; Seite 21, Zeile 19 - Seite 22, Zeile 4; Abbildung 1 * <br><br> --- | 1,5-9 | |
| A,D | EP-A-0 035 258 (SIEMENS AG) <br> * Seite 2, Zeile 10 - Seite 3, Zeile 28; Seite 9, Zeile 1 - Seite 12, Zeile 11; Abbildungen 1,8,9 * <br><br> ----- | 1-8 | |

RECHERCHIERTE SACHGEBIETE (Int. Cl. ³)

G 05 B 19/00
H 02 P 8/00

Der vorliegende Recherchenbericht wurde für alle Patentansprüche erstellt.

| Recherchenort <br> DEN HAAG | Abschlußdatum der Recherche <br> 12-06-1984 | Prüfer <br> WEIHS J.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82